# EUROPEAN PATENT APPLICATION

(11) **EP 2 816 240 A1**
(43) Date of publication of application: **24.12.2014**
(21) Application number: 13173208.3
(22) Date of filing: 21.06.2013
(51) Int. Cl.: F15B 21/04, E02F 9/22

(54) **Temperature adjustment of a fluid system**

(71) Applicant: Caterpillar Global Mining Equipment LLC, Oak Creek, WI 53154 (US)
(72) Inventor: Bitter, Marcus, 44267 Dortmund (DE)
(74) Representative: Kramer Barske Schmidtchen Patentanwälte PartG mbB

(57) **Abstract**

The present disclosure relates to a device and method for controlling temperature adjustment of fluid systems. A fluid system (1) may be configured to circulate a working fluid. The fluid system (1) may comprise a fluid temperature adjustment device (6) configured to adjust a temperature of the working fluid, and a viscosity sensor (10) configured to generate a signal indicative of a viscosity of the working fluid. A control unit (14) may be configured to control the fluid temperature adjustment device (6) based on the signal received from the viscosity sensor (10). Control of the working fluid temperature based on a measured working fluid viscosity may enhance the degree of control over the fluid system.

## Description

### Technical Field

The present disclosure relates to a device and method for controlling fluid systems, and more particularly to a device and method for controlling temperature adjustment of a working fluid circulating in a fluid system.

### Background

Fluid systems circulating a working fluid are widely spread in the field of mechanical engineering. For example, hydraulic circuits may circulate a hydraulic fluid to extend or retract hydraulic actuators to cause a movement of a connected component. Hydraulic circuits may further comprise torque converters and hydrodynamic couplings. As a further example of a fluid system, lubrication circuits circulate a lubricant to components to be lubricated such as, for example, gear wheels, pistons, shafts, bearings, valves, pumps, etc.

During operation of the fluid system, the working fluid may heat up due to, for example, heat transfer from hot components, or friction such that a temperature adjustment of the working fluid may be required.

The present disclosure is directed, at least in part, to improving or overcoming one or more aspects of prior systems.

### Summary of the Disclosure

According to one aspect of the present disclosure, a fluid system configured to circulate a working fluid may comprise a fluid temperature adjustment device configured to adjust a temperature of the working fluid. The fluid system may further comprise a viscosity sensor configured to generate a signal indicative of a viscosity of the working fluid, and a control unit configured to control the fluid temperature adjustment device based on the signal received from the viscosity sensor.

According to another aspect of the present disclosure, a mobile mining machine configured to be used in mining operations may comprise a fluid system as exemplary disclosed herein. The fluid system may be configured as a hydraulic circuit to power motion of the mobile mining machine.

According to yet another aspect of the present disclosure, a method for operating a fluid system circulating a working fluid may comprise measuring a viscosity of the working fluid. The method may further comprise adjusting a temperature of the working fluid based on the measured viscosity of the working fluid.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a diagram of an exemplary embodiment of a simplified fluid system according to the present disclosure;
Fig. 2 shows a flow diagram of an exemplary method for controlling a fluid system according to the present disclosure; and
Fig. 3 shows a flow diagram of another exemplary method for controlling a fluid system according to the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that fluid viscosity sensors can be introduced into temperature sensitive fluid systems circulating a working fluid. Such a viscosity sensor may generate a signal indicating a fluid viscosity which then can be sent to and received by a control unit to control operation of a fluid cooler included in the fluid system based on the signal received from the viscosity sensor.

The present disclosure is further based in part on the realization that additionally to control cooling circuits within a fluid system based on the fluid viscosity as discussed above, also control of heating circuits of fluid systems can be controlled based on the fluid viscosity.

Moreover, the present disclosure is based in part on the realization that viscosity based control of cooling and/or heating circuits within a fluid systems can be combined with a temperature based control to enhance the degree of control over the fluid circuit.

Accordingly, hereinafter exemplary embodiments of fluid systems including a viscosity sensor as well as exemplary methods for controlling such fluid systems are disclosed.

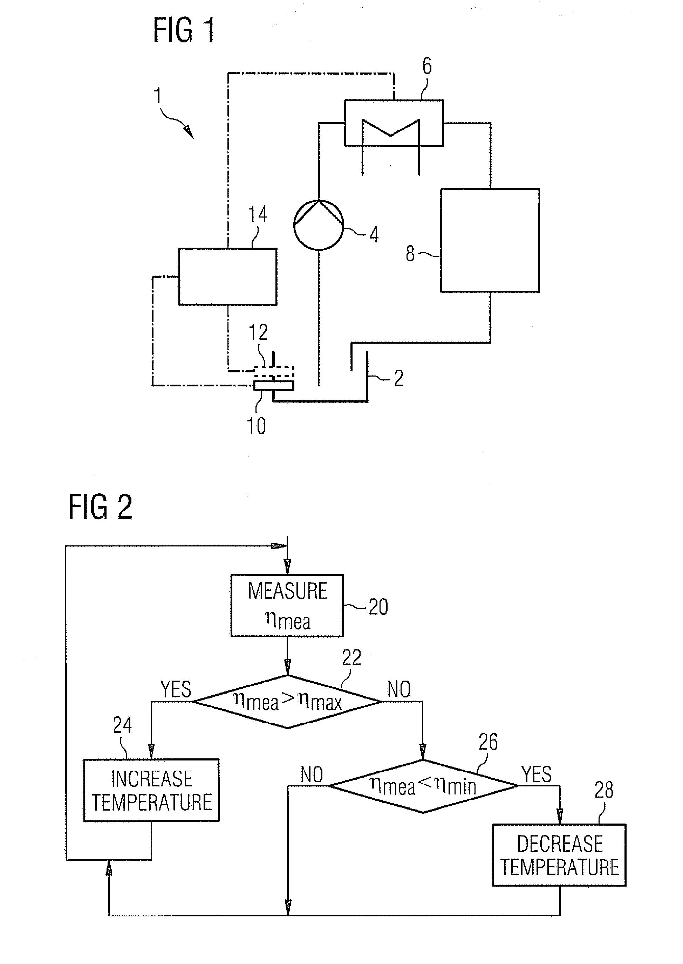

Referring to Fig. 1, a fluid system is referenced in its entirety with reference numeral 1. It is contemplated that fluid system 1 is depicted only very generically for the sake of simplicity. Naturally, fluid system 1 may comprise additional operation specific components to function as desired, for example, to function as a hydraulic circuit configured to propel a mobile mining machine, or to function as a lubrication circuit configured to lubricate certain engine or gear unit components.

Fluid system 1 shown in Fig. 1 comprises a fluid reservoir 2, a fluid pump 4, a fluid temperature adjustment device 6, a function unit 8, a viscosity sensor 10, and a control unit 14.

Fluid reservoir 2 serves as a working fluid source for fluid system 1. To refill and replace the working fluid, fluid reservoir 2 may comprise respective ports. An inlet of fluid reservoir 2 is fluidly connected to function unit 8 to receive working fluid therefrom after the working fluid having fulfilled its contemplated function within function unit 8 as is described in greater detail later on.

To circulate a working fluid through fluid system 1, fluid pump 4 is provided. Specifically, a suction port of fluid pump 4 is fluidly connected to an outlet of fluid reservoir 2. Fluid pump 4 may embody any type of pump used to deliver fluids in fluid circuits, including, but not limited to, vane pumps, gear pumps, and piston pumps. A type of fluid pump 4 may be chosen depending on, for example, fluid type, pressure range, and desired flow rate.

Fluid temperature adjustment device 6 is fluidly interconnected between a pressure port of fluid pump 4 and an inlet of function unit 8, and is configured to adjust a temperature of the working fluid flowing through or passing fluid temperature adjustment device 6. To cool the working fluid, fluid temperature adjustment device 6 may comprise a fluid cooler. Alternatively or additionally, fluid temperature adjustment device 6 may comprise a fluid heater to heat the working fluid. Fluid temperature adjustment device 6 is controlled by control unit 14 as is described in greater detail later on. Depending on the type of fluid system 1, fluid temperature adjustment device 6 may have various embodiments ranging from, for example, any type of heat exchanger such as shell, tube and plate heat exchanger to a simple fan directing ambient air onto an outer surface of a pipe in which the working fluid flows.

Fluidly interconnected between an outlet of fluid temperature adjustment device 6 and an inlet of fluid reservoir 2, function unit 8 is integrated in fluid system 1. Said function unit 8 can be regarded as a conceptual unit representing any type of unit or system in which the circulating working fluid of fluid system 1 fulfills its contemplated function. As a first example, fluid system 1 may embody as a hydraulic circuit configured to circulate a hydraulic fluid. In such hydraulic circuits, function unit 8 could be a hydraulic actuator such as a single acting hydraulic cylinder or a double acting hydraulic cylinder. Hydraulic fluid pressurized by fluid pump 4 may be provided to the hydraulic actuator to displace a piston reciprocatably mounted therein to move a connected component. In a second example, fluid system 1 may embody as a lubricating circuit that is configured to lubricate certain components requiring lubrication for proper operation.

To measure a viscosity of the working fluid, viscosity sensor 10 is provided. Specifically, viscosity sensor 10 is configured to generate a signal indicative of a viscosity of the working fluid circulating or to be circulated in fluid system 1. In the shown embodiment, viscosity sensor 10 is integrated into fluid reservoir 2. However, depending on various influences such as, for example, package requirements, sensor capabilities, and location of temperature peaks and/or low bottoms, viscosity sensor 10 may be integrated into fluid system 1 at any other suitable location such as, for example, within function unit 8. Suitable locations for installing viscosity sensor 10 may be, for example, at or close to locations within fluid system 1 where a certain viscosity of the working fluid is required for proper operation.

In some embodiments, viscosity sensor 10 may be either configured to carry out real-time measurements of the viscosity of the working fluid, or may be configured to carry out online measurements of the viscosity. Online measurements differ from real time measurements in that measurement values are determined and/or transmitted to control unit 14 after a delay, for example, in the seconds range or in the minutes range.

An example of a viscosity sensor is sold by Argo-Hytos under the trade name LubCos Visplus. Particularly, said sensor is capable to measure a dynamic viscosity of a fluid up to a maximum pressure of 10 bar within a temperature range for liquids from 0°C to 100°C. Additionally, said sensor is also capable of measuring temperatures and relative permittivity.

In addition to viscosity sensor 10, some embodiments of fluid system 1 may further comprise a temperature sensor 12 (indicated by a dashed line in Fig. 1). Temperature sensor 12 is configured to generate a signal indicative of a temperature of the working fluid. In the shown embodiment, temperature sensor 12 is integrated into fluid reservoir 2. However, analogous to potential locations of viscosity sensor 10 and depending on various influences such as, for example, package requirements, sensor capabilities, and location of temperature peaks and/or low bottoms, temperature sensor 12 may be integrated into fluid system 1 at any other suitable location such as, for example, within function unit 8, or directly downstream of temperature adjustments device 6.

In some embodiments, temperature sensor 12 and viscosity sensor 10 may be integrated in a single sensor unit.

To control fluid temperature adjustment device 6, control unit 14 is connected thereto via a communication link as indicated by a dashed dotted line. Control unit 14 controls fluid temperature adjustment device 6 based on the signal indicative of a viscosity of the working fluid received from viscosity sensor 10. To receive the signal from viscosity sensor 10, control unit 14 is connected to said sensor 10 via a communication link as indicated by a dashed dotted line in Fig. 1

Additionally, in embodiments comprising temperature sensor 12, control unit 14 may control fluid temperature adjustment device 6 also based on the signal received from fluid temperature adjustment device 6, the signal being indicative of a temperature of the working fluid. To receive said temperature signal, control unit 14 may be connected to temperature sensor 12 via a communication link as indicated by a dashed dotted line in Fig. 1.

Particularly, control unit 14 is configured to control a cooling and/or heating performance of fluid temperature adjustment device 6 depending on the embodiment. To increase a cooling performance, control unit 14 may control fluid temperature adjustment device 6 to increase, for example, a coolant flow, a cooling surface size, and/or a heat transfer. Similarly, to increase a heating performance, control unit 14 may control fluid temperature adjustment device 6 to increase, for example, a heating medium flow, a heating surface size, and/or a heat transfer.

In some embodiments, control unit 14 may be configured to control function unit 8 to dissipate more heat to the working fluid based on the signal received from viscosity sensor 10 and, thereby, increase a temperature of the working fluid.

In some embodiments, a plurality of viscosity sensors 10, and/or a plurality of temperature sensors 12 may be included in fluid system 1, and connected to control unit 14.

As described above, fluid system 1 has to be understood as a generic concept including various fluid systems such as hydraulic circuits, and lubrication circuits. Therefore, the arrangement of components included in fluid system 1 is not limited to the depicted arrangement. For example, in some embodiments, temperature adjustment device 6 may be fluidly connected downstream of function unit 8, or may be even integrated with fluid reservoir 2. Moreover, fluid system 1 may comprise different or additional components such as control valves, check valves, throttles, additional fluid pumps, additional fluid coolers and/or heaters, filter devices, cleaning devices, etc.

As used herein, the term working fluid may refer to a fluid type defined by the type of fluid system. For example, in case fluid system 1 is embodied as hydraulic circuit, the working fluid is formed by a hydraulic fluid. It is noted that also water hydraulics which may be, for example, used in underground mining are intended to fall within the scope of the present disclosure. In another example in which fluid system 1 embodies as a lubrication circuit, the working fluid is formed by a lubricant such as lubrication oil.

### Industrial Applicability

In the following, operation and functionality of fluid system 1 as well as the underlying method for controlling fluid system 1 is described with reference to Figs. 1 to 3.

During operation, a working fluid is circulated within fluid system 1 by fluid pump 4, and viscosity sensor 10 continuously or periodically measures a viscosity ηₘₑₐ of the working fluid at step 20 (see Fig. 2). Specifically, viscosity sensor 10 generates a signal indicative of the viscosity of the working fluid which is sent to and received by control unit 14.

At step 22, measured viscosity ηₘₑₐ of the working fluid is compared with a preset maximum viscosity ηₘₐₓ . In case measured viscosity ηₘₑₐ is greater than the preset maximum viscosity ηₘₐₓ , a temperature of the working fluid is increased at step 24 to decrease the viscosity of the working fluid. Particularly, control unit 14 controls fluid temperature adjustment device 6 to increase the temperature of the working fluid if the signal from the viscosity sensor 10 indicates a viscosity ηₘₑₐ of the working fluid is greater than preset maximum viscosity ηₘₐₓ . Otherwise, measured viscosity ηₘₑₐ of the working fluid is compared with a preset minimum viscosity ηₘᵢₙ at step 26. If control unit 14 determines that measured viscosity ηₘₑₐ of the working fluid is lower than a preset minimum viscosity ηₘᵢₙ , the temperature of the working fluid is decreased to increase the viscosity of the working fluid at step 28.

In some embodiments, measured viscosity ηₘₑₐ may be solely compared with preset maximum viscosity ηₘₐₓ , or with preset minimum viscosity ηₘᵢₙ which depends on the respective type of fluid system 1.

Preset maximum viscosity ηₘₐₓ and/or preset minimum viscosity ηₘᵢₙ may be set depending on the type of fluid system 1 to maintain a viscosity ensuring that the working fluid circulates within fluid system 1 at a desired viscosity which is required for proper operation of fluid system 1. For example, a too low viscosity of the working fluid may lead to increased leakage through insufficiently sealed connections between connections of various components. In another example, a too low or too high viscosity of the working fluid may lead to a breakdown of a tribological system. Further, a hydraulic circuit may require a certain fluid viscosity for proper operation of valves and/or hydraulic actuators.

In summary, fluid system 1 allows adjusting the temperature of the working fluid based on the viscosity of the working fluid to maintain the viscosity within a preset range, above a preset minimum viscosity, or below a preset maximum viscosity.

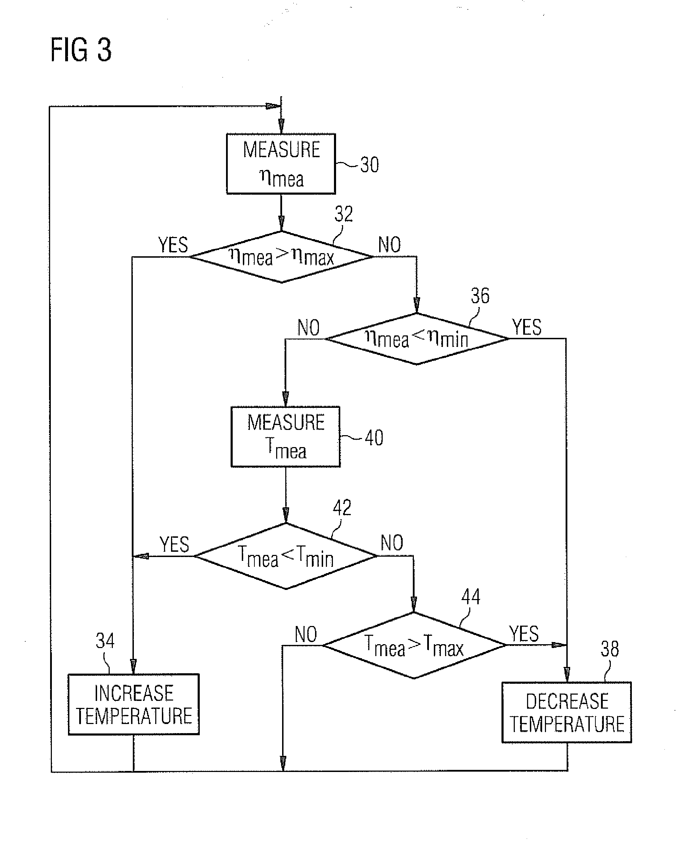

Turning to Fig. 3, in the following, an extended method for controlling fluid system 1 which now includes temperature sensor 12 (see Fig. 1) is described.

Besides the measurement of viscosity ηₘₑₐ , and comparison with preset maximum viscosity ηₘₐₓ , and/or preset minimum viscosity ηₘᵢₙ at steps 30, 32, and 36 as already described in connection with steps 20, 22, and 26 of the method depicted in Fig. 2, a temperature Tₘₑₐ may be measured at step 40, compared with a preset minimum temperature Tₘᵢₙ at step 42, and compared with a preset maximum temperature Tₘₐₓ at step 44. Control unit 14 controls fluid temperature adjustment device 6 at step 34 to increase the temperature of the working fluid if measured viscosity ηₘₑₐ is greater than preset maximum viscosity ηₘₐₓ , or measured temperature Tₘₑₐ is lower than a preset minimum temperature Tₘᵢₙ. Analogous, control unit 14 controls fluid temperature adjustment device 6 at step 38 to decrease the temperature of the working fluid if measured viscosity ηₘₑₐ is lower than preset minimum viscosity ηₘᵢₙ , or measured temperature Tₘₑₐ is greater than a preset maximum temperature Tₘₐₓ. For example, the method of Fig. 3 may be particularly applicable in fluid systems having temperature sensitive components which need to be protected from being overheated and/or overcooled.

In the shown method of Fig. 3, the viscosity based control superimposes the temperature based control. In other embodiments, viscosity based and temperature based control may be conducted in parallel, or temperature based control may superimpose the viscosity based control.

It is contemplated that the methods discussed above are described for working fluids having an inherent relationship between viscosity and temperature in which viscosity increases as temperature decreases. However, an opposite relationship may be also conceivable which would result in an opposite control of fluid temperature adjustment device 6.

Fluid system 1 may allow to operate function unit 8 which may be for example, a to be lubricated internal combustion engine or gear, within an optimal efficiency range as the viscosity of working fluid can be maintained in a preset optimal viscosity range.

The disclosed fluid system 1 may be capable to function (or at least to reduce damage to the fluid system) even if the wrong working fluid is used, for example, due to a faulty refill, because the basis for controlling cooling and/or heating of the working fluid is the actual viscosity of the fluid.

Moreover, fluid system 1 may be capable to determine a wear state of the working fluid based on a temporal development of a plurality of measured viscosity values of the working fluid and a plurality of measured temperature values of the working fluid. In case the determined wear state is greater than a preset wear state, appropriate measures can be taken. For example, operation of fluid system 1 may be automatically stopped by control unit 14, or control unit 14 may inform the operator via an interface such as a display, an activated LED, or an acoustical signal. A new working fluid can then replace the worn working fluid which may be done, for example, manually by a user or automatically via a backup fluid system.

As already indicated above, the exemplary disclosed fluid system and method may be applied in various applications. As a first example, fluid system 1 may be configured as a hydraulic circuit which is included in a mobile mining machine configured to be used in mining operations to power motion of the mobile mining machine. The hydraulic circuit may propel the mobile mining machine and/or may propel certain components of the mobile mining machine such as a shovel, or a chain tensioning device. Particularly, any conceivable hydraulically actuated component such as, for example, a hydraulic cylinder, a torque converter, and a hydrodynamic coupling may be integrated in the hydraulic circuit which is controlled based on a directly measured viscosity of the hydraulic fluid. During operation, the hydraulic fluid circulated in the hydraulic circuit may heat up due to friction and compression to high pressure values such that cooling of the hydraulic fluid may be necessary to maintain the hydraulic fluid viscosity within an optimal viscosity range. As further examples, fluid system 1 may be configured as an engine lubrication circuit configured to lubricate engine components requiring lubrication, or may be configured as a gear lubrication circuit for lubricating gear wheels, shafts, bearings, etc.

As used herein, the term viscosity may relate to shear viscosity, dynamic viscosity, and kinematic viscosity.

Although the preferred embodiments of this invention have been described herein, improvements and modifications may be incorporated without departing from the scope of the following claims.

## Claims

1. A fluid system (1) configured to circulate a working fluid, the fluid system (1) comprising:
a fluid temperature adjustment device (6) configured to adjust a temperature of the working fluid;
a viscosity sensor (10) configured to generate a signal indicative of a viscosity ( ηₘₑₐ ) of the working fluid; and
a control unit (14) configured to control the fluid temperature adjustment device (6) based on the signal received from the viscosity sensor (10).

2. The fluid system (1) of claim 1, wherein the control unit (14) is further configured to:
control the fluid temperature adjustment device (6) to decrease the temperature of the working fluid if the signal from the viscosity sensor (10) indicates a viscosity ( ηₘₑₐ ) of the working fluid is lower than a preset minimum viscosity ( ηₘᵢₙ ); and/or
control the fluid temperature adjustment device (6) to increase the temperature of the working fluid if the signal from the viscosity sensor (10) indicates a viscosity ( ηₘₑₐ ) of the working fluid is greater than a preset maximum viscosity ( ηₘₐₓ ).

3. The fluid system (1) of claim 1 or 2, further comprising:
a temperature sensor (12) configured to generate a signal indicative of a temperature (Tₘₑₐ) of the working fluid; and
wherein the control unit (14) is further configured to control the fluid temperature adjustment device (6) based on the signal received from the temperature sensor (12).

4. The fluid system (1) of claim 3, wherein the control unit (14) is further configured to:
control the fluid temperature adjustment device (6) to decrease the temperature of the working fluid if the signal from the temperature sensor (12) indicates a temperature (Tₘₑₐ) of the working fluid is greater than a preset maximum temperature (Tₘₐₓ); and/or
control the fluid temperature adjustment device (6) to increase the temperature of the working fluid if the signal from the temperature sensor (12) indicates a temperature (Tₘₑₐ) of the working fluid is lower than a preset minimum temperature (Tₘᵢₙ).

5. The fluid system (1) of any one of the preceding claims,
wherein the fluid temperature adjustment device (6) comprises a fluid cooler (6) configured to cool the working fluid.

6. The fluid system (1) of any one of the preceding claims,
wherein
the fluid temperature adjustment device (6) comprises a fluid heater (6) configured to heat the working fluid; and/or
the control unit (14) is further configured to control a function unit (8) of the fluid system (1) to dissipate more heat to the working fluid based on the signal received from the viscosity sensor (10).

7. The fluid system (1) of any one of the preceding claims,
wherein the fluid system (1) is configured as a hydraulic circuit (1), for example, comprising a hydraulic cylinder, a torque converter, and/or a hydrodynamical coupling.

8. The fluid system (1) of any one of the preceding claims, wherein the fluid system (1) is configured as a lubrication circuit (1), for example, an engine lubrication circuit, or a gear lubrication circuit.

9. The fluid system (1) of any one of the preceding claims, wherein the viscosity sensor (10) is configured to carry out online and/or real-time measurements of the viscosity of the working fluid.

10. A mobile mining machine configured to be used in mining operations, the mobile mining machine comprising a fluid system (1) according to any one of the preceding claims, the fluid system (1) being configured as a hydraulic circuit (1) to power motion of the mobile mining machine.

11. A method for operating a fluid system (1) circulating a working fluid, the method comprising:
measuring a viscosity ( ηₘₑₐ ) of the working fluid; and
adjusting a temperature of the working fluid based on the measured viscosity ( ηₘₑₐ ) of the working fluid.

12. The method of claim 11, wherein adjusting a temperature of the working fluid based on the measured viscosity ( ηₘₑₐ ) of the working fluid comprises:
decreasing the temperature of the working fluid if the measured viscosity ( ηₘₑₐ ) of the working fluid is lower than a preset minimum viscosity ( ηₘᵢₙ ); and/or
increasing the temperature of the working fluid if the measured viscosity ( ηₘₑₐ ) of the working fluid is greater than a preset maximum viscosity ( ηₘₐₓ ).

13. The method of claim 11 or claim 12, further comprising:
measuring a temperature (Tₘₑₐ) of the working fluid; and
adjusting the temperature of the working fluid based on the measured temperature (Tₘₑₐ) of the working fluid.

14. The method of claim 13, wherein adjusting the temperature of the working fluid based on the measured temperature (Tₘₑₐ) of the working fluid comprises:
increasing the temperature of the working fluid if the measured temperature (Tₘₑₐ) of the working fluid is lower than a preset minimum temperature (Tₘᵢₙ); and/or
decreasing the temperature of the working fluid if the measured temperature (Tₘₑₐ) is greater than a preset maximum temperature (Tₘₐₓ).

15. The method of any one of claims 11 to 14, further comprising determining a wear state of the working fluid based on a temporal development of a plurality of measured viscosity values ( ηₘₑₐ ) of the working fluid and a plurality of measured temperature values (Tₘₑₐ) of the working fluid.
